# DEMANDE DE BREVET EUROPEEN

(11) **EP 3 070 694 A1**
(43) Date de publication de la demande: **21.09.2016**
(21) Numéro de dépôt: 16159257.1
(22) Date de dépôt: 08.03.2016
(51) Int. Cl.: G07G 1/00, G06Q 20/20, G06Q 30/06, G06Q 50/12

(54) **PROCÉDÉ ET SYSTÈME POUR L'AIDE AU PAIEMENT DE REPAS PRIS EN SELF-SERVICE**

(30) Priorité: 16.03.2015 FR 1552084
(71) Demandeur: Polycaptil, 25000 Besancon (FR)
(72) Inventeur: NITA, Florin Dan, 25770 SERRE LES SAPINS (FR)
(74) Mandataire: Novagraaf Technologies

(57) **Abrégé**

L'invention concerne un procédé de paiement d'un repas constitué de denrées placées sur un plateau, dans un établissement de restauration collective (E), comportant la distribution d'un plateau (P) à un client, ce plateau étant associé à un premier identifiant (I_{P}), le passage du plateau par un ensemble de postes de distribution (P1, P2, P3) dans lequel pour chaque dépôt d'une denrée dans le plateau, un identifiant (I_{D1}, I_{D2}...I_{Dn}) de la denrée est mémorisé en relation au premier identifiant, dans une mémoire (M) d'un dispositif central de gestion (DC) de l'établissement; une étape de validation par le passage dudit plateau à un poste de caisse (C), durant laquelle des informations associés aux identifiants des denrées déposées sur le plateau sont automatiquement présentées sur une interface homme-machine (V) connectée au dispositif central de gestion, afin de permettre une vérification de la cohérence entre un contenu constaté du plateau et ces informations.

## Description

### DOMAINE DE L'INVENTION

La présente invention est relative au domaine de la restauration collective, et notamment aux établissements de type « self service », tels des cantines scolaires, des restaurants d'entreprise, etc.

Elle concerne plus précisément la gestion d'un plateau sur lequel un client place des plats et/ou boissons choisis jusqu'au paiement.

### CONTEXTE DE L'INVENTION

Les établissements de restauration collective de type « self service » visent à réduire le temps entre l'entrée d'un client dans l'établissement et le moment où il peut commencer à manger, tout en minimisant le personnel présent. D'une façon générale, les clients peuvent se répartir sur un ensemble de postes de distribution des denrées alimentaires (plats et boissons), chaque poste pouvant être spécialisé : plats chauds, plats réfrigérés (produits laitiers, etc.), entrées, desserts, boissons, etc. En multipliant les postes de distribution, il peut être possible d'augmenter le débit des clients.

Toutefois, dans la mesure où d'une part tous les clients doivent passer par la caisse pour la facturation et le paiement et d'autre part qu'il s'agit des opérations les plus coûteuses en temps, la caisse forme en général un goulot d'étranglement.

Des propositions ont été effectuées pour faciliter le passage en caisse, telles notamment celles exposées dans les demandes de brevets FR2721735 et FR2872013 Toutefois, ces propositions souffrent d'un inconvénient majeur que de n'être utilisables que lorsque les plateaux sont facturés selon un tarif unique. Elles sont typiquement utilisables dans le contexte de certains types d'établissement

### RESUME DE L'INVENTION

A cette fin, un premier aspect de la présente invention concerne un procédé de paiement d'un repas constitué de denrées placées sur un plateau, dans un établissement de restauration collective, comportant la distribution d'un plateau à un client, ledit plateau étant associé à un premier identifiant, le passage dudit plateau par un ensemble de postes de distribution dans lequel pour chaque dépôt d'une denrée dans ledit plateau, un identifiant de ladite denrée est mémorisé en relation audit premier identifiant dans une mémoire d'un dispositif central de gestion dudit établissement; une étape de validation par le passage dudit plateau à un poste de caisse, durant laquelle des informations associées aux identifiants des denrées déposées sur ledit plateau sont automatiquement présentées sur une interface homme-machine connectée audit dispositif central de gestion, afin de permettre une vérification de la cohérence entre un contenu constaté dudit plateau et lesdites informations.

Suivant des modes de réalisation préférés, l'invention comprend une ou plusieurs des caractéristiques suivantes qui peuvent être utilisées séparément ou en combinaison partielle entre elles ou en combinaison totale entre elles :
- lors de la distribution dudit plateau, ledit plateau est associé audit client au sein dudit dispositif central par la détermination d'un second identifiant, associé audit client ;
- ledit second identifiant est automatiquement déterminé par des moyens de lecture optique, magnétique ou de radiocommunication d'un badge porté par ledit client ;
- lors du passage à un poste de distribution, on détecte automatiquement ledit premier identifiant par des moyens de lecture optique, électromagnétique ou de radiocommunication ;
- lesdites informations comprennent au moins un nom ou un tarif de ladite denrée ;

Un autre aspect de l'invention concerne un système pour le paiement d'un repas constitué de denrées placées sur un plateau, dans un établissement de restauration collective, comportant
- au moins un poste de distribution de plateaux pour permettre la distribution d'un plateau à un client, ledit plateau étant associé à un premier identifiant,
- un ensemble de poste de distribution adapté pour, pour chaque dépôt d'une denrée dans ledit plateau, mémoriser un identifiant de ladite denrée, en relation audit premier identifiant, dans une mémoire d'un dispositif central de gestion dudit établissement;
- un poste de caisse permettant une validation dudit plateau par la présentation automatique des informations associées aux identifiants des denrées déposées sur ledit plateau sur une interface homme-machine connectée audit dispositif central de gestion, afin de permettre une vérification de la cohérence entre un contenu constaté dudit plateau et lesdites informations.

Suivant des modes de réalisation préférés, l'invention comprend une ou plusieurs des caractéristiques suivantes qui peuvent être utilisées séparément ou en combinaison partielle entre elles ou en combinaison totale entre elles :
- lors de la distribution dudit plateau, ledit poste de distribution de plateaux est prévu pour associer ledit plateau audit client au sein dudit dispositif central par la détermination d'un second identifiant, associé audit client ;
- ledit second identifiant est automatiquement déterminé par des moyens de lecture optique, magnétique ou de radiocommunication d'un badge porté par ledit client ;
- lors du passage à un poste de distribution, ledit poste de distribution est prévu pour détecter automatiquement ledit premier identifiant par des moyens de lecture optique ;
- lesdites informations comprennent au moins un nom ou un tarif de ladite denrée.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple d'implantations physiques dans un établissement de restauration collective de type « self service », selon un mode de réalisation de l'invention.
La figure 2 représente schématiquement un exemple de système pour le paiement d'un repas selon un mode de réalisation de l'invention.
La figure 3 représente schématiquement un exemple de contenu de la mémoire du dispositif central de gestion, selon un mode de réalisation de l'invention.

### DESCRIPTION DETAILLEE DE L'INVENTION

L'invention s'applique typiquement au contexte d'un établissement de restauration collective comme une cantine scolaire, un restaurant d'entreprise, ou, plus généralement tout établissement de type « self service ».

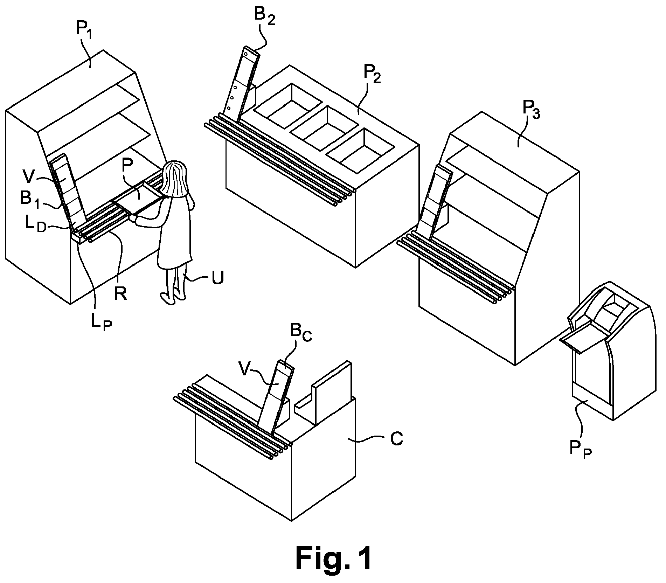

Dans ce type d'établissement, un client U peut circuler au sein d'un premier espace, représenté schématiquement sur la figure 1 et dans lequel sont disposés des postes de distribution P₁, P₂, P₃.

Le client U prend un plateau P à un poste de distribution de plateau Pp et peut ensuite aller de postes de distribution en postes de distribution pour prendre et déposer une denrée alimentaire.

Une denrée alimentaire est toute marchandise destinée à la consommation alimentaire. Cela recouvre donc des plats, qui peuvent être des plats ayant ou non subi d'une transformation dans la cuisine de l'établissement, et aussi les boissons.

Les plats peuvent être sous la forme de plats chauds, généralement servis à l'assiette, des plats conditionnés comme les produits laitiers (yaourts...), des plats cuisinés à l'avance, servis sous forme d'assiettes, ramequins, coupelles que l'utilisateur peut prendre lui-même dans les postes de distribution P₁, P₃, etc.

En fin de parcours, le client U peut passer par un poste de caisse C, afin que le prix des denrées alimentaires posées sur son plateau lui soit facturé.

Le client U peut alors accéder à un second espace, qui est un espace de consommation, dans lequel il peut trouver place pour s'assoir ou consommer les denrées alimentaires choisies.

Selon l'invention, le plateau P est associé à un premier identifiant Ip. Cet identifiant est attribué de façon unique à un plateau.

Les plateaux peuvent donc être munis d'un dispositif d'identification.

Selon un premier mode de réalisation, les plateaux disposent d'un moyen d'identification électronique de type radio-étiquette, par exemple conforme à la technologie RFID (Radio Frequency Identification)

Les radio-étiquettes sont de petits objets, tels que des étiquettes autoadhésives, qui peuvent être collés ou incorporés dans les plateaux. Les radio-étiquettes comprennent une antenne associée à une puce électronique qui leur permet de recevoir et de répondre aux requêtes radio émises depuis l'émetteur-récepteur situés dans les bornes associés aux postes de distribution, ainsi qu'au poste de caisse C.

Selon un autre mode de réalisation, le dispositif d'identification peut être à lecture optique, tel qu'un code barres (ou code à barres) ou que les diverses variantes de code à 1 ou 2 dimensions : QR code, Datamatrix, etc. Ce dispositif peut prendre la forme d'une étiquette collée sur le plateau sur une ou plusieurs faces.

Les plateaux étant amenés à subir des lavages récurrents et des diverses manipulations, cette mise en oeuvre présente l'avantage de ne pas mettre en oeuvre de dispositifs sensibles à l'eau ou à l'humidité, ou couteux. Il est en effet aisé de coller de nouvelles étiquettes en cas de détérioration des étiquettes antérieures.

Le poste de distribution de plateaux P_{P} peut être classique en soi.

Les plateaux peuvent être simplement empilés de sorte que chaque client entrant peut se saisir d'un plateau parmi la ou les piles de plateaux empilés.

Le distributeur de plateaux P_{P} peut également comporter un bâti, des moyens d'élévation d'une pile de plateaux à l'intérieur du bâti, et un moyen d'extraction.

Selon un mode de réalisation de l'invention, lors de la distribution du plateau au client, le plateau est en outre associé au client par la détermination d'un second identifiant I_{c} associé au client. Ainsi, lorsqu'un client U prend un plateau, une association est effectuée entre le client et le plateau.

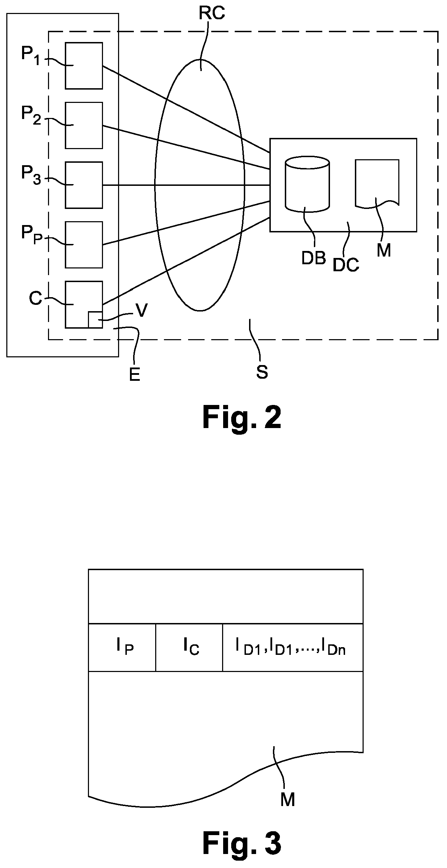

Cette association est mémorisée au sein d'une mémoire M d'un dispositif central de gestion DC de l'établissement E de restaurant, ainsi qu'illustré par la figure 2.

Ce dispositif central de gestion DC peut être déployé sur le site même de l'établissement E, ou bien géographiquement déporté. Le déploiement de l'invention est indépendant de cet aspect, dans la mesure où le dispositif central de gestion SC est en communication avec des bornes associées aux postes de distribution P1, P2, P3 via un réseau de communication RC. Les bornes, le dispositif central de gestion, le réseau de télécommunication ainsi que la caisse C forment donc un système S permettant de faciliter le passage en caisse des clients.

Le poste de distribution de plateaux P_{P} comporte dans ce cas des moyens pour identifier le client, c'est pour déterminer l'identifiant Ic du client.

Différentes mises en oeuvre sont possibles.

Ainsi, le client peut porter sur lui un dispositif lui permettant de s'identifier : il peut s'agir d'un badge, par exemple conforme à la technologie RFID, d'une carte magnétique ou électronique, ou tout autre badge ou moyen pour mémoriser un identifiant Ic et permettre sa lecture à distance ou par contact.

Le poste de distribution de plateaux P_{P} dispose alors des moyens pour déterminer cet identifiant I_{c} en fonction du type de dispositif porté par le client. Il peut s'agir de moyens de lecture optique, de moyens de radiocommunication (de type RFID ou NFC pour « Near Field Communication »), de moyens de lecture électromagnétique comme un lecteur de cartes à puce ou de cartes magnétiques, etc.

Il est également possible de mettre en oeuvre un mécanisme de reconnaissance de voix, d'empreinte digitale ou oculaire, etc. de sorte que le client n'a alors pas besoin de porter un quelconque dispositif.

Le dispositif central de gestion DC peut comporter une base de données DB associant des informations aux identifiants clients Ic. Parmi ces informations peuvent figurer des données de compte comme un nom, prénom, une société d'appartenance, etc. ainsi qu'un montant d'un compte, duquel le prix de chaque ticket est débité lors du passage en caisse, comme il sera vu ultérieurement. Un identifiant d'un compte bancaire peut également être associé, en sus ou en remplacement du montant de compte, afin que lors du passage en caisse, un ordre de virement soit automatiquement adressé à l'établissement bancaire tenant le compte bancaire de client U.

Une phase d'enregistrement peut permettre de créer un compte pour un client U et de créer un enregistrement au sein de la base de données DB associant son identifiant I_{C} à ses données de compte. Cette phase d'enregistrement peut être effectuée par un personnel qualifié ou par lui-même via différents outils (bornes spécifiques, site web, etc.)

Pour un client de passage, c'est-à-dire qui n'est pas amené à entrer régulièrement dans l'établissement E, un mécanisme particulier peut être mis en place afin d'éviter la création d'un dispositif d'identification. Il est par exemple possible que ce client U utilise sa carte bancaire afin de créer un compte (temporaire) au sein de la base de données. Ce compte peut être temporaire et avoir une durée de vie qui se termine lors du passage en caisse, par exemple.

Le poste de distribution de plateaux P_{P} peut disposer de différents moyens pour permettre aux clients U de passage de créer rapidement un compte provisoire et de se voir affecter dynamiquement un identifiant Ic de client. Il peut s'agir uniquement d'un lecteur de carte bancaire, mais ce lecteur peut être associé à un écran tactile ou tout autre dispositif permettant une interaction enrichie pour faciliter la création du compte.

Par ailleurs, la distribution d'un plateau P peut être subordonnée à la détermination de l'identifiant I_{C} du client U (et donc, le cas échéant, à la création d'un compte pour ce client U).

L'association entre l'identifiant du plateau I_{P} et l'identifiant du client Ic peut être stockée dans la mémoire M du dispositif central de gestion DC. A un instant donné, un identifiant I_{P} de plateau ne peut être associé qu'à un unique identifiant I_{C} de client, tandis qu'il peut être prévu que plusieurs identifiants de plateau I_{P} soient associés à un même identifiant client I_{C}. Cela peut être possible si un même client invite une autre personne et souhaite payer pour lui.

Cette association est valable le temps d'une session qui peut s'achever lors du passage en caisse, par exemple, ou à la fin d'un service.

De façon connue en soi, le client U peut aller de poste de distribution en poste de distribution P1, P2, P3.

Selon l'invention, pour chaque dépôt d'une denrée alimentaire dans son plateau P, un identifiant de la denrée alimentaire en question est mémorisé en relation avec l'identifiant I_{P} du plateau P, dans la mémoire M du dispositif central de gestion DC.

La figure 3 illustre un contenu possible de la mémoire M, selon un mode de réalisation de l'invention. Cette mémoire prend la forme d'une table d'une base de données relationnelle, dans laquelle une ligne (ou enregistrement) correspond à un plateau. Cette ligne représente une association entre l'identifiant I_{P} d'un plateau, l'identifiant I_{C} du client utilisant ce plateau, et un ensemble d'identifiants I_{D1}, I_{D2}...I_{Dn} correspondants aux denrées alimentaires posées sur le plateau (à un instant donné).

Le poste de distribution peut être équipé d'une borne. Cette borne peut être disposée à coté ou sur le poste de distribution, de sorte que celui-ci peut rester conforme aux postes de distribution actuellement sur le marché. Alternativement, la borne peut être intégrée dans un poste de distribution spécifique.

La borne B1, B2, B3 associée à un poste de distribution, P1, P2, P3 respectivement, dispose de moyens de détermination de identifiant I_{P} du plateau et de détermination des identifiants des denrées alimentaires déposé sur le plateau. La borne est également reliée au dispositif central de gestion DC via le réseau de communication RC.

La borne peut posséder un lecteur Lp au niveau des rails R sur lequel le client U peut poser son plateau. La détermination de l'identifiant Ip peut ainsi se faire, par des moyens de lecture optique, électromagnétique, de radiocommunication..., sans intervention particulière du client.

La localisation des moyens d'identification sur le plateau et celle du lecteur Lp peuvent être prévus pour une meilleure collaboration en fonction de la technologie choisie.

Ainsi, par exemple, si une technologie de type code est employée, le lecteur Lp est l'étiquette du plateau doivent être disposés de sorte que lorsque le client U pose son plateau sur les rails à proximité de la borne, le lecteur optique soit possible. Par exemple, l'étiquette peut être placée sous le plateau et le lecteur optique Lp sous les rails de sorte qu'il puisse lire les codes barres des plateaux posés sur les rails R. La lecture du code barres est ainsi automatique.

Un signal sonore ou lumineux peut accompagner la réussite de la détection.

De la même façon, la façon dont est détecté l'identifiant de la ou des denrées alimentaires posées sur le plateau P par le client U dépend fortement de la technologie utilisée.

Par exemple, sur le poste P1, des denrées alimentaires peuvent porter des étiquettes comportant un code à barres. Le client U peut alors prendre une denrée alimentaire, passer l'étiquette devant un lecteur optique L_{D} située sur la borne B₁ et poser la denrée alimentaire sur son plateau P.

Si le client U souhaite annuler le choix d'une denrée, il peut appuyer sur un bouton d'annulation située sur la borne et passer à nouveau la denrée alimentaire en question devant le lecteur optique L_{D}.

D'autres denrées alimentaires (sur un autre poste de distribution ou sur le même poste de distribution) peuvent disposer d'un code numérique ou alphanumérique qui peut être inscrit sur une étiquette collée à la denrée ou bien sur un présentoir à coté de la denrée, etc.

La borne dispose alors d'un clavier numérique ou alphanumérique permettant au client de saisir ce code, correspondant à la denrée alimentaire choisie.

Si le client U souhaite annuler le choix d'une denrée, il peut appuyer sur un bouton d'annulation située sur la borne et saisir à nouveau le code de la denrée alimentaire en question.

D'autres denrées alimentaires (sur un autre poste de distribution ou sur le même poste de distribution) peuvent disposer d'une étiquette radio de type RFID, qui peut être collée ou fixée à la denrée alimentaire.

Dans ce cas, la dépose sur le plateau P peut suffire pour faire entrer la denrée dans le champ de lecture du lecteur RFID et implicitement permettre la détection de l'identifiant I_{D1}...I_{Dn} de la denrée choisie.

Si le client U souhaite annuler le choix d'une denrée, il peut simplement remettre la denrée alimentaire en question sur le présentoir, hors du plateau P.

Un signal sonore ou lumineux peut accompagner la réussite de chaque opération : détermination d'une denrée alimentaire posée sur le plateau, ou bien annulation.

Lorsqu'une denrée alimentaire est posée sur le plateau, son identifiant est mémorisée dans la mémoire M du dispositif central de gestion DC en relation avec l'identifiant du plateau I_{P}. Ainsi, par exemple, au fur et à mesure que le client U remplit son plateau, les identifiants I_{D1}, I_{D2}...I_{Dn} des denrées choisies viennent s'ajouter dans le champ représenté en troisième colonne de la table de la figure 3.

En conséquence, la mémoire M contient l'état de chaque plateau à instant donné, c'est-à-dire son contenu.

La borne peut disposer d'un écran V permettant au client U de visualiser des informations relatives à la denrée alimentaire choisie. Ces informations peuvent comprendre l'identifiant de la denrée alimentaire, mais aussi d'autres données mémorisées en association à cet identifiant au sein d'une base de données DB qui peut être localisée dans le dispositif central de gestion DC. Il peut par exemple s'agir du prix de cette denrée alimentaire, d'une désignation, etc.

Il peut également permettre de visualiser des informations relatives à l'ensemble des denrées alimentaires posées sur le plateau P. Ces informations peuvent être fournies par le dispositif central de gestion DC à partir des informations stockées dans la mémoire M : à partir de l'identifiant du plateau I_{P}, le dispositif peut déterminer l'ensemble des identifiants I_{D1}, I_{D2}...I_{Dn} stockés en relation avec lui.

Il est alors possible d'interroger la base de données DB pour avoir d'autres informations sur ces denrées (prix, dénomination...) et envoyer ces informations vers la borne qui peut alors les afficher sur l'écran V.

L'écran peut être tactile afin de permettre des opérations, en remplacement d'autres moyens (boutons...). Par exemple, l'annulation du dépôt d'une denrée alimentaire peut se faire via l'écran tactile.

Dans l'exemple de la figure 1, le poste de distribution P2 est dédié à des plats, par exemple des plats chauds, qui peuvent être servi à l'assiette. Il peut s'agir de viande, de poisson, de légumes, etc., c'est-à-dire de denrées alimentaires sur lesquels il n'est pas possible d'apposer une étiquette (code barres, RFID...).

La borne associée B₂ peut proposer une série de boutons, chacun correspondant à une proposition de denrées alimentaires sur le présentoir du poste de distribution P₂. Les boutons physiques peuvent être remplacés par des boutons « virtuels » sur un écran tactile.

Il peut être prévu alternativement des moyens d'identification attachés à l'assiette.

En dehors des postes de distribution, des bornes peuvent être également prévu afin de permettre au client U de consulter des informations sur le contenu de son plateau (par exemple vérifier un prix, ou bien consulter le prix total de son plateau avant passage en caisse), ou sur son compte (par exemple, l'argent encore disponible sur son compte...).

La caisse (ou poste de caisse) C peut posséder des moyens techniques similaires à ceux d'un poste de distribution. Ainsi, la caisse C dispose de moyens pour déterminer l'identifiant I_{P} d'un plateau, tel que le lecteur L_{P} préalablement décrit.

La détection de cet identifiant peut automatiquement générer une requête à partir de la borne B_{C} associée à la caisse C vers le dispositif central de gestion DC. Celui-ci peut alors rechercher les identifiants des denrées alimentaires I_{D1}, I_{D2}...I_{Dn} stockés en relation avec lui au sein de la mémoire M, puis des informations associées à ces identifiants au sein de la base de données DB. Les informations peuvent ensuite être transmises à la borne B_{C} en réponse à la requête.

La borne B_{C} peut alors présenter ces informations sur une interface homme-machine V. Cet interface homme-machine est typiquement un écran, notamment un écran tactile, mais d'autres types d'interface homme-machine peuvent être prévus, de même que pour les bornes associés aux postes de distribution, notamment des interfaces vocales à usage des clients malvoyants.

Les informations peuvent comprendre les dénominations des denrées alimentaires qui ont été choisis préalablement par le client U et qui, normalement, doivent se trouver sur le plateau P considérée ; ainsi que, par exemple, leur tarif.

A ce stade, il est donc possible de vérifier la cohérence entre ces informations et le contenu réel du plateau, qui peut être constaté par le client U ou bien par un membre du personnel de l'établissement E présent à la caisse C.

En cas de divergence, il est possible de procéder à des actions correctives, notamment par la saisie à la main par le membre du personnel d'une denrée alimentaire n'ayant pas été préalablement détectée ; ou bien au contraire par l'annulation d'une denrée alimentaire non présente sur le plateau P.

Lorsqu'il y a cohérence, il peut alors être procédé à la facturation ou édition d'un ticket de caisse, et au paiement.

Le paiement peut être automatique en fonction des données du compte du client C. Il peut ainsi être prévu de déduire d'un montant de compte le prix total du plateau P. Il peut aussi être prévu de déclencher un virement via un compte bancaire à partir de données bancaire stockées en association avec l'identifiant du client I_{C} au sein du dispositif central de gestion. Mais d'autres moyens de paiement peuvent également être prévus et possibles (paiement en espèces, paiement par une carte bancaire présentée au passage en caisse, paiement par chèques restaurant, etc.)

En conséquence, lors du passage en caisse, les informations relatives aux denrées alimentaires choisies sont déjà disponibles pour la caisse et aucune saisie n'est normalement nécessaire pour le membre du personnel s'occupant de la caisse. Il peut n'avoir qu'une tâche de vérification de la cohérence et de déclenchement de la facturation et du paiement.

Il en résulte un allègement des fonctions des opérations de caisse, entrainant d'une part un risque d'erreurs de caisse moindre (puisque toute l'attention de la personne en charge va justement à la vérification de cohérence) et d'autre part un gain substantiel du temps de passage de en caisse, puisque les manipulations sont réduites.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de paiement d'un repas constitué de denrées placées sur un plateau, dans un établissement de restauration collective (E), comportant la distribution d'un plateau (P) à un client, ledit plateau étant associé à un premier identifiant (I_{P}), le passage dudit plateau par un ensemble de postes de distribution (P1, P2, P3) dans lequel pour chaque dépôt d'une denrée dans ledit plateau, un identifiant (I_{D1}, I_{D2}...I_{Dn}) de ladite denrée est mémorisé en relation audit premier identifiant dans une mémoire (M) d'un dispositif central de gestion (DC) dudit établissement; une étape de validation par le passage dudit plateau à un poste de caisse (C), durant laquelle des informations associées aux identifiants des denrées déposées sur ledit plateau sont automatiquement présentées sur une interface homme-machine (V) connectée audit dispositif central de gestion, afin de permettre une vérification de la cohérence entre un contenu constaté dudit plateau et lesdites informations.

2. Procédé selon la revendication 1, dans lequel lors de la distribution dudit plateau, ledit plateau est associé audit client au sein dudit dispositif central par la détermination d'un second identifiant (I_{C}), associé audit client.

3. Procédé selon la revendication 2, dans lequel ledit second identifiant (Ic) est automatiquement déterminé par des moyens de lecture optique, magnétique ou de radiocommunication d'un badge porté par ledit client.

4. Procédé selon l'une des revendications précédentes, dans lequel, lors du passage à un poste de distribution, on détecte automatiquement ledit premier identifiant (Ip) par des moyens de lecture optique, électromagnétique ou de radiocommunication.

5. Procédé selon l'une des revendications précédentes, dans lequel lesdites informations comprennent au moins un nom ou un tarif de ladite denrée.

6. Système (S) pour le paiement d'un repas constitué de denrées placées sur un plateau, dans un établissement de restauration collective (E), comportant
- Au moins un poste de distribution de plateaux (P_{P}) pour permettre la distribution d'un plateau (P) à un client (U), ledit plateau étant associé à un premier identifiant (I_{P}),
- un ensemble de poste de distribution (P1, P2, P3) adapté pour, pour chaque dépôt d'une denrée dans ledit plateau, mémoriser un identifiant (I_{D1}, I_{D2}...I_{Dn}) de ladite denrée, en relation audit premier identifiant, dans une mémoire (M) d'un dispositif central de gestion (SC) dudit établissement;
- un poste de caisse (C) permettant une validation dudit plateau par la présentation automatique des informations associées aux identifiants des denrées déposées sur ledit plateau sur une interface homme-machine (V) connectée audit dispositif central de gestion, afin de permettre une vérification de la cohérence entre un contenu constaté dudit plateau et lesdites informations.

7. Système (S) selon la revendication 6, dans lequel lors de la distribution dudit plateau, ledit poste de distribution de plateaux (P_{P}) est prévu pour associer ledit plateau audit client au sein dudit dispositif central par la détermination d'un second identifiant (I_{C}), associé audit client.

8. Système (S) selon la revendication 7, dans lequel ledit second identifiant est automatiquement déterminé par des moyens de lecture optique, magnétique ou de radiocommunication d'un badge porté par ledit client.

9. Système (S) selon l'une des revendications précédentes, dans lequel, lors du passage à un poste de distribution, ledit poste de distribution est prévu pour détecter automatiquement ledit premier identifiant par des moyens de lecture optique.

10. Système (S) selon l'une des revendications 6 à 9, dans lequel lesdites informations comprennent au moins un nom ou un tarif de ladite denrée.
